# FASCICULE DE BREVET EUROPEEN

(11) **EP 4 196 317 B1**
(45) Date de publication et mention de la délivrance du brevet: **11.09.2024**
(21) Numéro de dépôt: 21742447.2
(22) Date de dépôt: 20.07.2021
(51) Int. Cl.: B23Q 11/00, G01B 11/10, G01B 11/24, G01B 21/04, B23Q 17/20

(54) **PROCÉDÉ DE MESURE SUR UNE PIÈCE ET APPAREIL TEL QU'UN ÉQUIPEMENT POUR UNE MACHINE D'USINAGE**
VERFAHREN ZUR MESSUNG AUF EINEM WERKSTÜCK UND GERÄT, WIE EINE AUSRÜSTUNG FÜR EINE BEARBEITUNGSMASCHINE
METHOD FOR MEASURING ON A PART AND APPARATUS SUCH AS A DEVICE FOR A MACHINING TOOL

(30) Priorité: 17.08.2020 EP 20191316; 17.08.2020 CH 10202020
(43) Date de publication de la demande: 21.06.2023
(73) Titulaire: KIF Parechoc SA, 1347 Le Sentier (CH)
(72) Inventeur: BERGAMO, Anthony, 2000 Neuchâtel (CH); JACOT, Philippe, 2022 Bevaix (CH); MONBARON, Jean-Marc, 2072 Saint-Blaise (CH); MÜLLER, Arnaud, 1400 Yverdon-les-Bains (CH); MÜLLER, Damien, 2072 Saint-Blaise (CH)
(74) Mandataire: Bovard SA Neuchâtel
(86) Numéro de dépôt international: PCT/EP2021/070273
(87) Numéro de publication internationale: WO 2022/037878

(56) Documents cités:
- EP-A1- 2 190 626
- EP-A1- 3 312 553
- DE-A1- 10 208 990
- DE-A1- 102006 050 838
- DE-A1- 102010 013 880

## Description

### Domaine technique de l'invention

La présente invention se rapporte au domaine du contrôle d'un usinage réalisé par une machine-outil telle qu'une décolleteuse, un tour automatique, un tour multibroche, une machine de transfert ou un centre de tournage-fraisage. Plus précisément, elle concerne un procédé de mesure sur une pièce au moins partiellement usinée, ainsi qu'un appareil par exemple choisi parmi une machine de mesure autonome et un équipement pour une machine d'usinage.

### État de la technique

Traditionnellement, une pièce réalisée par une machine d'usinage à commande numérique n'est examinée et mesurée qu'après avoir été usinée puis déplacée hors de la machine d'usinage et nettoyée. Lorsque l'on procède de la sorte, un défaut d'usinage n'est détecté qu'après coup, relativement longtemps après que l'usinage de la pièce a été terminé. L'état de la machine d'usinage a alors toutes les chances d'avoir évolué entretemps (en termes de dilatation thermique et d'usure d'outil principalement), ce qui rend relativement inexacte voire erronée une correction des paramètres d'usinage sur la base de la mesure sur la pièce.

Dans la demande de brevet européen EP 2 363 238, il est proposé d'équiper une machine d'usinage d'un dispositif de mesure optique à même de mesurer des dimensions sur une pièce qui est encore en place dans la machine d'usinage après y avoir subi une ou plusieurs opérations d'usinage. Des copeaux sont produits par l'usinage, pendant lequel un fluide d'usinage est en outre employé. Il en résulte que, à l'issue de l'usinage, la pièce porte généralement des résidus qui peuvent fausser la mesure optique. C'est pourquoi il est prévu que la pièce puisse être nettoyée de manière automatisée avant la mesure. Toutefois, le nettoyage automatisé de la pièce peut être insuffisant et la mesure optique peut être faussée parce que la pièce n'est pas assez propre bien qu'ayant été nettoyée. Cela peut avoir différentes conséquences néfastes, notamment celle de dérégler pour la suite le pilotage de l'usinage lorsque la mesure est employée pour effectuer une correction sur les paramètres d'usinage.

EP 2 190 626 A1 divulgue un procédé selon le préambule de la revendication 1.

### Exposé sommaire de l'invention

L'invention a au moins pour but de permettre de s'assurer que des mesures réalisées optiquement sur une pièce au moins partiellement usinée ne sont pas faussées d'une quantité rédhibitoire du fait d'un nettoyage insuffisant de cette pièce.

Selon l'invention, ce but est atteint grâce à un procédé de mesure sur une pièce au moins partiellement usinée, comprenant une étape dans laquelle :
a) on réalise optiquement une mesure dimensionnelle sur la pièce.

L'étape a) comprend une action dans laquelle :
b) on effectue un nettoyage de la pièce au moyen d'un ou plusieurs jets quand on réalise la mesure dimensionnelle.

Le procédé selon l'invention comprend en outre une action dans laquelle :
c) pour déterminer à partir de quel instant au cours du nettoyage une erreur de mesure due au résidu liquide sur la pièce est considérée comme négligeable, on effectue une analyse au moins sur une décroissance qu'une valeur mesurée obtenue par la mesure dimensionnelle connaît pendant le nettoyage à mesure que du résidu liquide présent sur la pièce est ôté de cette pièce.

Le procédé de mesure défini ci-dessus peut incorporer une ou plusieurs autres caractéristiques avantageuses, isolément ou en combinaison, en particulier parmi celles définies ci-après.

Avantageusement, on réalise l'étape a) dans une machine d'usinage ou dans une machine de mesure autonome.

Avantageusement, on effectue l'action c) en temps réel quand on effectue l'action b).

Avantageusement, on calcule la vitesse de décroissance de la valeur mesurée, on compare cette vitesse de décroissance à une vitesse prédéfinie et on applique la règle selon laquelle l'erreur de mesure due au résidu liquide sur la pièce est considérée comme négligeable à partir de l'instant où la vitesse de décroissance est inférieure à la vitesse prédéfinie.

Avantageusement, le jet ou l'un des jets est un jet à base de gaz, tel que l'air ou l'azote.

Avantageusement, le jet ou l'un des jets comprend une dispersion de gouttelettes.

Avantageusement, le jet ou l'un des jets est une pulvérisation de gouttelettes.

Avantageusement, les jets sont des jets successifs et comprennent un jet comprenant des gouttelettes puis un jet à base de gaz.

La mesure dimensionnelle peut être continue ou intermittente sur la durée du nettoyage de la pièce.

Le nettoyage de la pièce peut être continu pendant tout ou partie de la mesure dimensionnelle, que cette mesure dimensionnelle soit intermittente ou bien qu'elle soit continue.

Le nettoyage de la pièce peut également être intermittent. En particulier, le soufflage peut être interrompu de manière intermittente lorsque la mesure dimensionnelle est également intermittente et constituée de plusieurs mesures ponctuelles successives. Procéder de la sorte est approprié notamment lorsque la pièce vibre lors du soufflage du fait, par exemple, de sa finesse. Lorsque le nettoyage de la pièce est momentanément stoppé, une mesure ponctuelle est effectuée sur la pièce alors que cette pièce ne vibre plus. Une fois que la mesure ponctuelle a été effectuée, le nettoyage de la pièce reprend jusqu'à la mesure ponctuelle suivante.

Avantageusement, le nettoyage de la pièce est interrompu momentanément pendant chaque mesure ponctuelle d'une succession de mesures ponctuelles que comprend la mesure dimensionnelle.

Avantageusement, on réalise la mesure dimensionnelle au moyen d'un dispositif de mesure optique apte à émettre un rayonnement et comprenant au moins une glace de protection destinée à être traversée par ce rayonnement. Avantageusement, l'étape a) comprend une action dans laquelle :
d) on effectue un nettoyage de la glace de protection au moyen d'un ou plusieurs jets quand on réalise la mesure dimensionnelle.

Avantageusement, le dispositif de mesure optique comprend une caméra numérique et le procédé de mesure comprend des actions dans lesquelles :
e) on réalise une analyse d'image à même de détecter, sur les images fournies par la caméra numérique, et de quantifier une éventuelle anomalie d'un type pouvant résulter d'une salissure sur la glace de protection ;
f) à partir de l'analyse d'image, on détermine si, sur la glace de protection, il n'existe aucune salissure quantifiée comme rédhibitoire pour la mesure dimensionnelle.

Avantageusement, on effectue l'action d) tant que, à l'étape f), on détermine que, sur la glace de protection, il existe au moins une salissure quantifiée comme rédhibitoire pour la mesure dimensionnelle.

Avantageusement, on effectue les actions e) et f) en temps réel quand on réalise la mesure dimensionnelle dans l'étape a).

Avantageusement, le procédé de mesure est piloté par une unité électronique de pilotage telle qu'une unité électronique de pilotage comprenant un calculateur.

Avantageusement, le procédé comprend une étape qui précède l'étape a) et dans laquelle on réalise au moins une opération d'usinage sur la pièce.

L'invention a également pour objet un appareil par exemple choisi parmi une machine de mesure autonome et un équipement pour une machine d'usinage, l'appareil comprenant un dispositif de mesure optique adapté pour réaliser optiquement une mesure dimensionnelle sur une pièce au moins partiellement usinée, un dispositif de nettoyage à même d'effectuer un nettoyage de la pièce au moyen d'un ou plusieurs jet quand le dispositif de mesure optique réalise la mesure dimensionnelle, ainsi qu'un calculateur configuré pour réaliser une analyse au moins sur une décroissance qu'une valeur mesurée obtenue par la mesure dimensionnelle connaît pendant le nettoyage à mesure que du résidu liquide présent sur la pièce est ôté de cette pièce, et déterminer au moyen de cette analyse à partir de quel instant au cours du nettoyage une erreur de mesure due au résidu liquide sur la pièce est considérée comme négligeable.

L'appareil défini ci-dessus peut incorporer une ou plusieurs autres caractéristiques avantageuses, isolément ou en combinaison, en particulier parmi celles définies ci-après.

Avantageusement, le calculateur est configuré pour, dans l'analyse, calculer la vitesse de décroissance de la valeur mesurée, comparer cette vitesse de décroissance à une vitesse prédéfinie et appliquer la règle selon laquelle l'erreur de mesure due au résidu liquide sur la pièce est considérée comme négligeable à partir de l'instant où la vitesse de décroissance est inférieure à la vitesse prédéfinie.

Avantageusement, le dispositif de nettoyage est à même de produire un jet à base de gaz, tel que l'air ou l'azote.

Avantageusement, le dispositif de nettoyage est à même de produire un jet comprenant une dispersion de gouttelettes.

Avantageusement, le dispositif de mesure optique est apte à émettre un rayonnement et comprend au moins une glace de protection destiné à être traversé par ce rayonnement, le dispositif de nettoyage étant à même de réaliser simultanément un nettoyage de la pièce, au moyen du ou des jets, et au moins un nettoyage de la glace de protection au moyen d'un autre ou de plusieurs autres jets tandis que le dispositif de mesure optique est dans une position de mesure dans laquelle le dispositif de mesure optique est à même de réaliser optiquement une mesure dimensionnelle sur la pièce.

### Brève description des dessins

D'autres avantages et caractéristiques ressortiront plus clairement de la description qui va suivre de plusieurs modes particuliers de réalisation de l'invention donnés à titre d'exemple non limitatifs et représentés aux dessins annexés, parmi lesquels :
- la figure 1 est une vue en perspective qui représente schématiquement un équipement selon un premier mode de réalisation de l'invention et qui représente également une décolleteuse pourvue de cet équipement ;
- la figure 2 est une vue schématique et partielle, en élévation, qui est une vue depuis l'intérieur de la décolleteuse et qui représente le même équipement que la figure 1, ainsi que quelques constituants seulement de la décolleteuse ;
- La figure 3 est une vue schématique et partielle, en coupe, d'un canon de guidage appartenant à la décolleteuse de la figure 1, d'une barre de matière passant à travers ce canon de guidage et d'une pièce qui est encore portée par une extrémité de la barre de matière à usiner après avoir été au moins partiellement usinée ;

- la figure 4 est un schéma de principe de la mesure réalisée par un dispositif de mesure optique que comprend l'équipement représenté sur les figures 1 et 2 ;
- la figure 5 est une vue simplifiée, en perspective, sur laquelle une tête d'un dispositif de nettoyage faisant partie de l'équipement des figures 1 et 2 comporte trois buses dirigeant des jets nettoyants sur la pièce au moins partiellement usinée visible sur la figure 3 et sur deux glaces de protection du dispositif de mesure optique représenté sur la figure 4 ;
- la figure 6 est une vue schématique, en coupe transversale, qui illustre un nettoyage qu'effectue l'un des jets nettoyants représenté sur la figure 5 et qui est le nettoyage d'un résidu liquide présent sur la pièce au moins partiellement usinée, après l'usinage ;
- la figure 7 est une représentation graphique qui montre comment une valeur dimensionnelle mesurée optiquement sur la pièce au moins partiellement usinée portant le résidu liquide évolue au cours du temps, pendant le nettoyage illustré sur la figure 6 ; et
- la figure 8 est une vue simplifiée, en perspective, sur laquelle une tête d'un dispositif de nettoyage faisant partie d'un appareil selon un deuxième mode de réalisation de l'invention est positionnée de manière à pouvoir diriger des jets nettoyants sur une pièce au moins partiellement usinée et sur deux glaces de protection.

### Description de modes préférentiels de l'invention

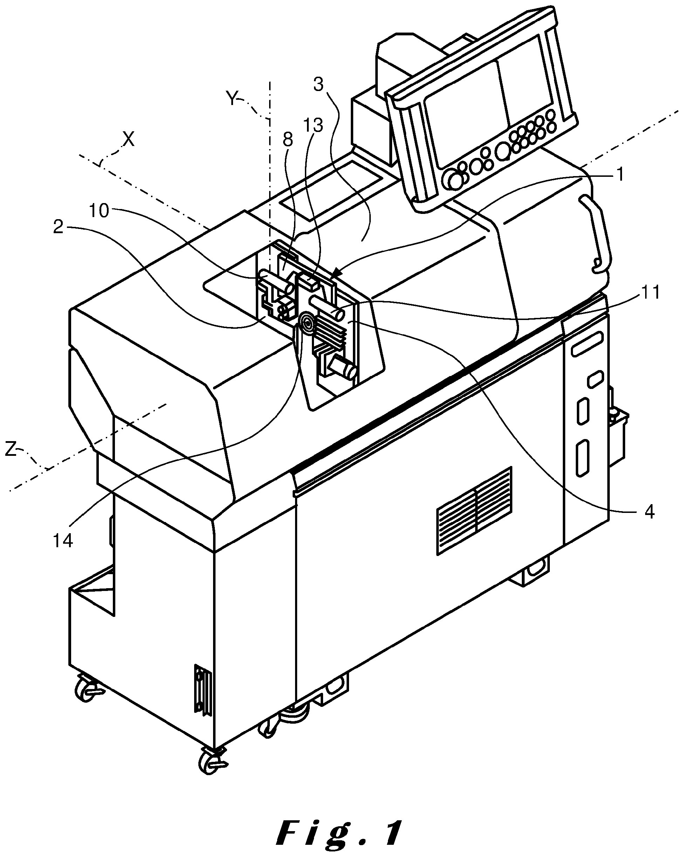

Sur la figure 1, un équipement 1 selon un premier mode de réalisation de l'invention est monté sur un porte-outil 2, à l'intérieur d'une machine d'usinage 3 qui est plus précisément une décolleteuse dans l'exemple proposé. L'axe horizontal référencé Z sur la figure 1 est l'axe de rotation d'une barre de matière à usiner lorsque cette barre de matière à usiner est entraînée en rotation sur elle-même par la machine d'usinage 3 afin que son extrémité avant puisse être usinée par un outil de coupe.

Toujours sur la figure 1, la référence 4 désigne un autre porte-outil qui, comme le porte-outil 2, fait partie de la décolleteuse 1. Chacun des porte-outils 2 et 4 est déplaçable dans un plan vertical, selon deux directions de translation perpendiculaires, à savoir une direction de translation horizontale X et une direction de translation verticale Y qui sont orthogonales à l'axe de rotation Z.

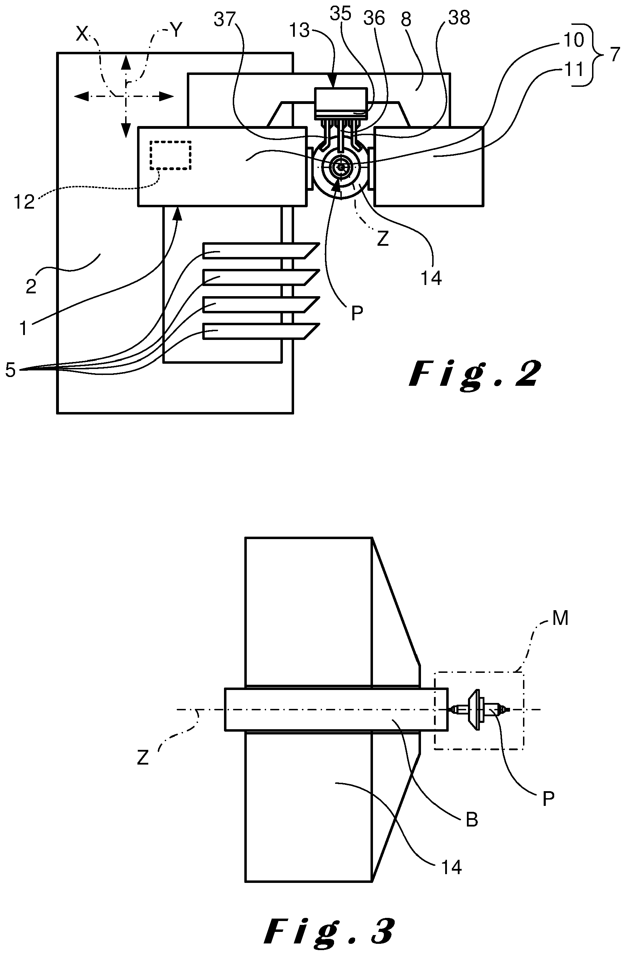

Sur la figure 2, le porte-outil 4 et plusieurs autres composants de la machine d'usinage 3 ne sont pas représentés dans un souci de clarté. Toujours sur la figure 2, le porte-outil 2 porte l'équipement 1, ainsi que plusieurs outils de coupe 5 en dessous de cet équipement 1.

L'équipement 1 comporte un dispositif de mesure optique 7, dont deux parties distantes l'une de l'autre sont une unité 10 d'émission d'un rayonnement et une unité 11 de réception de ce rayonnement. Dirigées l'une vers l'autre, l'unité d'émission 10 et l'unité de réception 11 sont reliées rigidement par un bras coudé 8 dans le mode de réalisation des figures 1 et 2. Le dispositif de mesure optique 7 comporte en outre un calculateur 12, prévu pour traiter les données numériques fournies par l'unité de réception 11.

L'équipement 1 est un appareil qui comprend un dispositif de nettoyage 13 en plus du dispositif de mesure 7. Le dispositif de nettoyage 13 est monté sur le bras coudé 8, au-dessus de la trajectoire du rayonnement entre l'unité d'émission 10 et l'unité de réception 11.

Sur la figure 3, une barre de matière à usiner B est guidée par un canon de guidage 14 de la décolleuse 3. De manière connue, le canon de guidage 14 peut être rotatif et il se trouve devant une poupée mobile, non représentée, qui est à même de tenir la barre de matière à usiner B et d'entraîner en rotation cette barre de matière à usiner B de manière à la faire tourner sur l'axe de rotation Z. La poupée mobile est également à même de déplacer en translation et de positionner la barre de matière à usiner B selon la direction que définit l'axe de rotation Z.

Lorsque la barre de matière à usiner B est entraînée en rotation, son extrémité avant peut être usinée par enlèvement de matière, par un outil de coupe tel que l'un des outils de coupe 5. Bien entendu, il est possible de doter la machine d'usinage 3 d'équipements à même de réaliser d'autres types d'usinage.

Sur la figure 3, une pièce P a été au moins partiellement usinée dans la barre de matière à usiner B, dont elle n'a pas été encore détachée. En d'autres termes, la nouvelle extrémité avant de la barre de matière à usiner B porte la pièce P, devant le canon de guidage 14.

Comme le dispositif de mesure optique 7 est monté sur le porte-outil 2, il peut être déplacé par ce porte-outil 2 et placé hors de la zone d'usinage lorsqu'un usinage a lieu. En l'absence d'usinage, le dispositif de mesure optique 7 peut être positionné de manière à pouvoir effectuer optiquement des mesures dimensionnelles sur la pièce P encore en place dans la zone d'usinage, ce qui est le cas sur la figure 2.

Ainsi, le dispositif de mesure optique 7 peut effectuer rapidement une ou plusieurs mesures dimensionnelles sur la pièce P dans la machine d'usinage 3 avant que l'usinage de cette pièce P dans la machine d'usinage 3 soit terminé. Pour ce faire, l'usinage de la pièce P est interrompu pendant la mesure et il est repris ensuite, éventuellement en prenant en compte la ou les mesures dimensionnelles pour introduire une correction sur les paramètres d'usinage. Le dispositif de mesure optique 7 peut également effectuer une ou plusieurs mesures dimensionnelles sur la pièce P dans la machine d'usinage 3 une fois que l'usinage de cette pièce P dans la machine d'usinage 3 a été entièrement réalisé.

Sur la figure 3, la pièce P se trouve à l'intérieur de la zone de mesure M, où le dispositif de mesure optique 7 peut effectuer des mesures dimensionnelles. Il en est ainsi lorsque le dispositif de mesure optique 7 est positionné comme sur la figure 2, c'est-à-dire de manière à pouvoir effectuer optiquement des mesures dimensionnelles sur la pièce P encore en place dans la zone d'usinage M.

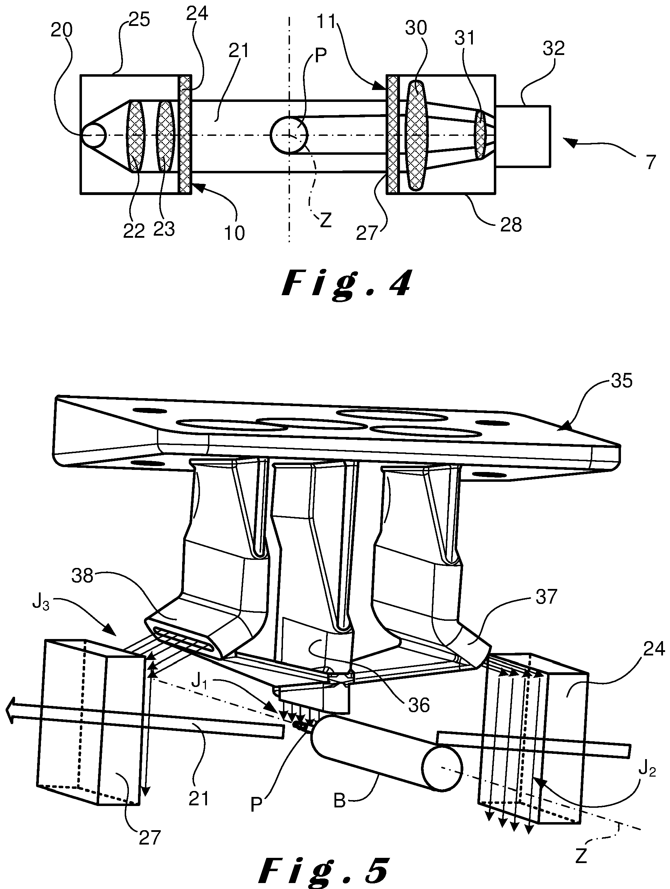

La figure 4 est un schéma de principe du dispositif de mesure optique 7 sans son calculateur 12. Ainsi qu'on peut le voir sur cette figure 4, l'unité d'émission 10 comprend une source de rayonnement 20, à même d'émettre un rayonnement 21. Un jeu de lentilles 22 et 23 forme un collimateur au travers duquel le rayonnement 21 devient un rayonnement 21 collimaté, qui est le rayonnement émis par l'unité d'émission 10. Le rayonnement 21 collimaté sort de l'unité d'émission 10 par une glace de protection 24, qui ferme un boîtier de protection 25.

Après avoir été partiellement intercepté par la pièce P, le rayonnement collimaté 21 entre dans l'unité de réception 11 par une glace de protection 27. La glace de protection 27 ferme un boîtier de protection 28 qui renferme un jeu de lentilles 30 et 31 de l'unité de réception 11. Le jeu de lentilles 30 et 31 fait converger le rayonnement 21 vers l'entrée d'une caméra numérique 32, matricielle, que comprend l'unité de réception 11. Les données numériques émises par la caméra numérique 32 sont fournies au calculateur 12 qui en déduit des mesures de dimensions de l'objet mesuré.

Le dispositif de mesure optique 7 est à même de mesurer toutes les spécificités extérieures d'une pièce telles que des longueurs, des diamètres, des rayons, des angles, des concentricités et des circularités.

Sur la figure 5, seuls quelques composants de l'équipement 1, ainsi qu'une portion avant de la barre de matière à usiner B portant la pièce P, sont représentés dans un souci de clarté. Lorsque le dispositif de mesure optique 7 est dans une position de mesure pour pouvoir effectuer optiquement une ou plusieurs mesures dimensionnelles sur la pièce P, une tête 35 du dispositif de nettoyage 13 et les glaces de protection 24 et 27 sont positionnés par rapport à la pièce P comme cela est représenté sur la figure 5.

La tête 35 comporte trois buses 36, 37 et 38 d'émission de jets nettoyants. La buse 36 est une buse centrale destinée à émettre un jet dirigé sur la pièce P. Elle se trouve entre les buses 37 et 38, qui sont des buses latérales, coudées vers l'extérieur. La buse 37 est destinée à émettre un jet sur la glace de protection 24 de l'unité d'émission 10. La sortie de la buse 37 est dirigée vers cette glace de protection 24. La buse 38 est destinée à émettre un jet sur la glace de protection 27 de l'unité de réception 11. La sortie de la buse 38 est dirigée vers cette glace de protection 27.

Sur la figure 5, une mesure dimensionnelle au moyen du rayonnement 21 a lieu sur la pièce P en place dans la machine d'usinage 3. Elle est effectuée optiquement par le dispositif de mesure optique 7, qui est symbolisé par ses glaces de protection 24 et 27 sur la figure 5.

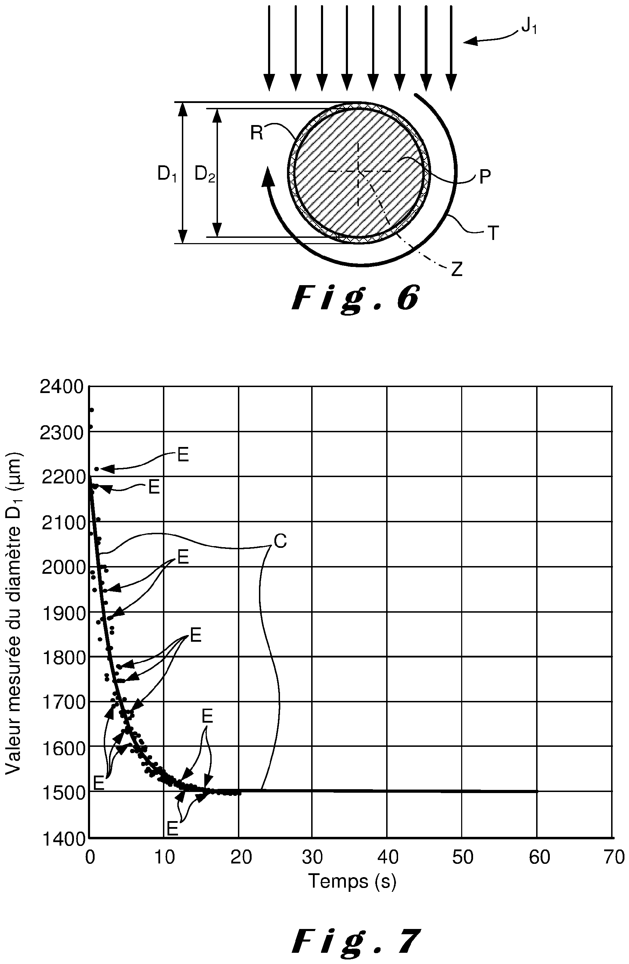

Toujours sur la figure 5, un jet J₁ émis par la buse 36 nettoie la pièce P quand le dispositif de mesure optique 7 réalise la mesure dimensionnelle sur cette pièce P. La figure 6 illustre le nettoyage que réalise le jet J₁.

Sur les figures 5 et 6, la pièce P est au moins partiellement usinée et porte un résidu liquide R apporté lors de l'usinage, ainsi que d'éventuels autres contaminants tels que des copeaux produits lors de l'usinage. Le résidu liquide R peut notamment être un reste d'un fluide de coupe employé lors de l'usinage pour refroidir la pièce P et/ou comme lubrifiant dans la zone d'usinage.

Lors du nettoyage par le jet J₁, la pièce P est de préférence mise en rotation à faible vitesse, autour de l'axe de rotation Z, ce qu'illustre la flèche T sur la figure 6. Sur la pièce P, la portion de surface exposée au jet J₁ change ainsi au cours du nettoyage, qui est de ce fait amélioré.

Le jet J₁ peut être un jet à base de gaz, qui réalise un essuyage dynamique de la pièce P. Le gaz dans le jet J₁ peut être, par exemple, de l'air ou de l'azote. Le jet J₁ peut être un jet de gaz seul, ou un jet de gaz comprenant une dispersion de gouttelettes, ou bien encore une pulvérisation de gouttelettes. Le jet J₁ peut être l'un de plusieurs jets successifs dirigés sur la pièce P par la buse 36. Par exemple, ces jets successifs peuvent comprendre un jet comportant une dispersion de gouttelettes puis un jet à base de gaz.

Le jet J₁ débarrasse la pièce P du résidu liquide R et des éventuels autres contaminants. En même temps, une valeur mesurée est obtenue par la mesure dimensionnelle. Dans l'exemple proposé sur la figure 6, cette valeur mesurée est la mesure du diamètre D₁, qui est la somme d'un diamètre réel D₂ de la pièce P, de l'épaisseur du résidu liquide R sur le dessus de la pièce P et de l'épaisseur du résidu liquide sur le dessous de la pièce P.

Dans la représentation graphique de la figure 7, le temps s'écoulant au cours du nettoyage par le jet J₁ est en abscisses, tandis que la valeur mesurée du diamètre D₁ est en ordonnées. Toujours sur la figure 7, les points E sont des points expérimentaux dont les coordonnées ont été obtenues par la mesure dimensionnelle lors d'un même nettoyage. La courbe C résulte d'un ajustement ou fitting que le calculateur 12 réalise par exemple par régression linéaire sur les points expérimentaux E.

Au fur et à mesure du nettoyage par le jet J₁, le résidu liquide R est ôté progressivement de la pièce P, si bien que le diamètre D₁ décroît au cours du temps, ce que l'on constate sur la figure 7. Comme ceci a été découvert par les inventeurs de la présente invention, la vitesse de décroissance de la valeur mesurée du diamètre D₁ est très élevée au début du nettoyage par le jet J₁ et diminue jusqu'à devenir presque nulle après une certaine durée, notamment dans le cas où le jet J₁ est un jet à base de gaz tel que l'air ou l'azote éventuellement précédé d'une pulvérisation de gouttelettes par la buse 36.

Les inventeurs de la présente invention ont fait l'observation selon laquelle la vitesse de décroissance de la valeur mesurée du diamètre D₁ devient presque nulle lorsqu'il n'y a pratiquement plus de résidu liquide R sur la pièce P. Il est tiré parti de cette observation pour déterminer à partir de quel instant au cours du nettoyage une erreur de mesure due au résidu liquide R sur la pièce P est considérée comme négligeable compte tenu d'un seuil de précision prédéfini sur les cotes de la pièce P.

En effet, afin de déterminer à partir de quel instant au cours du nettoyage une erreur de mesure due au résidu liquide R sur la pièce P est considérée comme négligeable, le calculateur 12 analyse comment la valeur mesurée du diamètre D₁ décroit pendant le nettoyage de la pièce P par le jet J₁. Par exemple, le calculateur 12 effectue une comparaison entre une vitesse prédéfinie et la vitesse de décroissance de la valeur mesurée du diamètre D₁ pendant le nettoyage de la pièce P par le jet J₁. Le calculateur 12 considère que l'erreur de mesure due au résidu liquide R sur la pièce P est négligeable lorsque la vitesse de décroissance de la valeur mesurée du diamètre D₁ pendant le nettoyage de la pièce P par le jet J₁ est inférieure à la vitesse prédéfinie. Pouvant être fonction de paramètres tels que la viscosité de l'huile de coupe utilisée et/ou des réglages sur le jet J₁, la vitesse prédéfinie peut être choisie sur la base de résultats d'expérimentations à la portée de l'homme du métier.

La mesure dimensionnelle sur la pièce P peut être continue pendant tout ou partie du nettoyage de cette pièce P par le jet J₁.

Dans l'exemple représenté sur le graphique de la figure 7, au lieu d'être continue, la mesure dimensionnelle sur la pièce P est intermittente et constituée d'une succession de mesures ponctuelles faites pendant le nettoyage de cette pièce P par le jet J₁.

Le nettoyage de la pièce P par le jet J₁ peut être continu et se poursuivre pendant la mesure dimensionnelle de la pièce P.

Le nettoyage de la pièce P par le jet J₁ peut également être intermittent. Notamment, il peut être interrompu pendant chacune de plusieurs mesures ponctuelles dont une succession constitue la mesure dimensionnelle sur la pièce P. On peut choisir d'interrompre le nettoyage par le jet J₁ pendant chaque mesure ponctuelle notamment dans le cas où le nettoyage par le jet J₁ fait vibrer la pièce P, par exemple parce que celle-ci est particulièrement fine. De la sorte, on procède de manière que, afin d'être précise et non affectée par une vibration de la pièce P, chaque mesure ponctuelle sur la pièce P a lieu alors que la pièce P est immobile.

Sur la figure 5, un nettoyage de la glace de protection 24 par un jet J₂ émis par la buse 37 et un nettoyage de la glace de protection 27 par un jet J₃ émis par la buse 38 sont réalisés en même temps que le nettoyage de la pièce P par le jet J₁.

Le nettoyage de la pièce P par le jet J₁ peut provoquer des éclaboussures susceptibles de salir les glaces de protection 24 et 27. Les nettoyages par les jets J₂ et J₃ maintiennent les glaces de protection 24 et 27 propres en présence de telles éclaboussures éventuelles, en plus d'ôter de ces glaces de protection 24 et 27 d'éventuelles salissures présentes avant que commence le nettoyage de la pièce P.

Le jet J₂ peut être un jet à base de gaz, qui réalise un essuyage dynamique de la glace de protection 24. Le jet J₃ peut être un jet à base de gaz, qui réalise un essuyage dynamique de la glace de protection 27. Le gaz dans le jet J₂ et/ou dans le jet J₃ peut être, par exemple, de l'air ou de l'azote. Au moins l'un des jets J₂ et J₃ peut être un jet de gaz seul, ou un jet de gaz comprenant une dispersion de gouttelettes, ou bien encore une pulvérisation de gouttelettes. Le jet J₂ peut être l'un de plusieurs jets successifs dirigés sur la glace de protection 24 par la buse 37. Par exemple, ces jets successifs peuvent comprendre un jet comportant une dispersion de gouttelettes puis un jet à base de gaz. Le jet J₃ peut être l'un de plusieurs jets successifs dirigés sur la glace de protection 27 par la buse 38. Par exemple, ces jets successifs peuvent comprendre un jet comportant une dispersion de gouttelettes puis un jet à base de gaz.

Sur la figure 5, le jet J₂ est un jet à base de gaz qui forme un rideau de vent devant la glace de protection 24. Ce rideau de vent protège la glace de protection 24 contre d'éventuelles projections, qui peuvent être des éclaboussures de résidu liquide R provenant de la pièce P du fait du nettoyage de cette pièce P. Avantageusement, le jet J₂ à base de gaz commence avant le nettoyage de la pièce P. Lorsque tel est le cas, la protection de la glace 24 contre des éclaboussures, par le rideau de vent formé par le jet J₂, commence avant que le nettoyage de la pièce P puisse provoquer de telles éclaboussures.

Encore sur la figure 5, le jet J₃ est un jet à base de gaz qui forme un rideau de vent devant la glace de protection 27. Ce rideau de vent protège la glace de protection 27 contre d'éventuelles projections, qui peuvent être des éclaboussures de résidu liquide R provenant de la pièce P du fait du nettoyage de cette pièce P. Avantageusement, le jet J₃ à base de gaz commence avant le nettoyage de la pièce P. Lorsque tel est le cas, la protection de la glace 27 contre des éclaboussures, par le rideau de vent formé par le jet J₃, commence avant que le nettoyage de la pièce P puisse provoquer de telles éclaboussures.

La caméra numérique 32 fourni des images sous forme de données graphiques au calculateur 12. Lorsqu'une salissure telle qu'une goutte de liquide de coupe est présente sur l'une des glaces de protection 24 et 27, une tâche sombre correspondante est présente sur les images fournies par la caméra numérique 32 si la salissure est dans la partie du rayonnement 21 que la pièce P n'intercepte pas. Une telle tâche sombre constitue une anomalie qu'une analyse d'image est à même de détecter et de quantifier.

Par exemple, dans les images fournies par la caméra numérique 32, l'analyse d'image peut identifier l'ombre résultant de l'interception du rayonnement 21 par la pièce P. L'analyse d'image peut en outre déterminer s'il existe au moins une tâche sombre hors de cette ombre résultant de l'interception du rayonnement 21 par la pièce P. Si une tâche sombre est identifiée hors de l'ombre résultant de l'interception du rayonnement 21 par la pièce P, sa taille et le niveau d'assombrissement où elle est localisée peuvent également être quantifiés et servir pour évaluer le type de cause à l'origine de cette tâche sombre et son importance.

Sur les images fournies par la caméra numérique 32, le calculateur 12 réalise une analyse d'image à même de détecter et de quantifier une éventuelle anomalie d'un type pouvant résulter d'une salissure sur l'une des glaces de protection 24 et 27.

Le calculateur 12 commande d'effectuer le nettoyage des glaces de protection 24 et 27 tant que, à partir de l'analyse d'image, il détermine que, sur l'une des glaces de protection 24 et 27, il existe au moins une salissure quantifiée comme rédhibitoire pour la précision de la ou des mesures dimensionnelles réalisées optiquement sur la pièce P.

L'invention ne se limite pas à son premier mode de réalisation décrit précédemment, ni à son deuxième mode de réalisation décrit plus loin. En particulier, bien qu'un seul porte-outil porte l'ensemble de l'équipement 1 au moins dans le premier mode de réalisation de l'invention, il peut en être autrement sans sortir du cadre de l'invention. Par exemple, le porte-outil 4 peut porter l'unité d'émission 10, tandis que le porte-outil 2 porte l'unité de réception 11. Également, l'unité d'émission 10 et l'unité de réception 11 peuvent être toutes deux portées par le porte-outil 2, tandis que le porte-outil 4 porte le dispositif de nettoyage 13.

De plus, l'équipement 1 selon le premier mode de réalisation décrit plus haut de l'invention est adapté pour équiper une décolleteuse. Toutefois, l'invention ne se limite au cas où l'invention est mise en oeuvre dans une décolleteuse. L'invention peut en effet être mise en oeuvre dans une machine d'usinage autre qu'une décolleteuse. Par exemple, l'invention peut être mise en oeuvre dans un tour automatique, un tour multibroche, une machine de transfert ou un centre de tournage-fraisage, moyennant une adaptation appropriée de l'équipement 1, cette adaptation étant à la portée de l'homme du métier.

Dans la description ci-dessus d'un premier mode de réalisation de l'invention, le dispositif de mesure optique 7 et le dispositif de nettoyage 13 équipent une machine d'usinage. Toutefois, il peut en être autrement. Par exemple, sans sortir du cadre de l'invention, l'appareil comprenant le dispositif de mesure optique 7 et le dispositif de nettoyage 13 peut être une machine de mesure autonome, qui n'est pas destinée et/ou apte à être montée dans une machine d'usinage. Cette machine de mesure autonome peut servir au contrôle de pièces réalisées par une machine d'usinage. Elle comprend au moins un dispositif de tenue de la pièce P et peut comprendre un actionneur à même de déplacer en translation ce dispositif de tenue et/ou comprendre un sous-ensemble d'entraînement en rotation de ce même dispositif de tenue.

Lorsqu'une machine de mesure autonome comprend en un ou plusieurs exemplaires un dispositif de tenue de la pièce P, ainsi que le dispositif de mesure optique 7 et le dispositif de nettoyage 13, cette machine de mesure autonome peut avoir le même fonctionnement que l'équipement 1, c'est-à-dire le fonctionnement décrit précédemment et qui comprend notamment les nettoyages au moyen de jets, une mesure dimensionnelle au moyen du rayonnement 21 sur la pièce P et la détermination de l'instant à partir duquel, au cours du nettoyage de la pièce P, une erreur de mesure due au résidu liquide sur la pièce P est considérée comme négligeable. Par exemple, au moins un des procédés définis dans les revendications annexées peut être mis en oeuvre au moyen d'une machine de mesure autonome comprenant en un ou plusieurs exemplaires un dispositif de tenue de la pièce P, le dispositif de mesure optique 7 et le dispositif de nettoyage 13.

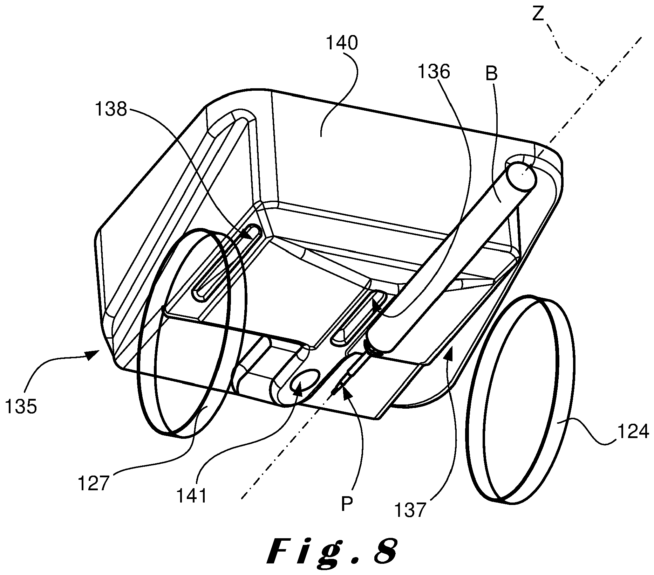

Sur la figure 8, une portion avant d'une barre de matière à usiner B porte une pièce P au moins partiellement usinée. Elle est tenue par un dispositif mobile de tenue non représenté, tel que la poupée mobile de la machine d'usinage 3.

Toujours sur la figure 8, seuls quelques composants d'un appareil selon un deuxième mode de réalisation de l'invention sont représentés dans un souci de clarté. Ce sont une tête 135 et deux glaces de protection 124 et 127. Les autres composants de l'appareil selon un deuxième mode de réalisation de l'invention peuvent être identiques ou analogues aux composants de l'équipement 1 sans sa tête 35 et sans ses glaces de protection 24 et 27.

L'appareil selon un deuxième mode de réalisation de l'invention peut être un équipement pour une machine d'usinage, comme l'équipement 1. L'appareil selon un deuxième mode de réalisation de l'invention peut aussi être une machine de mesure autonome, non apte à être montée dans une machine d'usinage.

Dans l'appareil selon un deuxième mode de réalisation de l'invention, une unité d'émission remplissant la même fonction que l'unité d'émission 10 comprend la glace de protection 124. Son seul composant représenté sur la figure 8 est cette glace de protection 124, qui remplit la même fonction de protection que la glace de protection 24.

Dans l'appareil selon un deuxième mode de réalisation de l'invention, une unité de réception remplissant la même fonction que l'unité de réception 11 comprend la glace de protection 127. Son seul composant représenté sur la figure 8 est cette glace de protection 127, qui remplit la même fonction de protection que la glace de protection 27.

Un rayonnement non représenté, identique au rayonnement 21, est destiné à passer à travers les glaces de protection 124 et 127.

Dans l'appareil selon un deuxième mode de réalisation de l'invention, un dispositif de nettoyage remplissant les mêmes fonctions que le dispositif de nettoyage 13 comprend la tête 135. Son seul composant représenté sur la figure 8 est cette tête 135, qui remplit la même fonction que la tête 35.

Dans ce qui suit, on ne décrit de la tête 135 que ce qui la distingue de la tête 35. En outre, chaque référence désignant ci-après une partie de la tête 135 identique ou équivalente à une partie référencée de la tête 35 est construite en augmentant de cent la référence repérant cette partie sur la tête 35.

Les buses 136, 137 et 138 font parties d'un bloc 140 et chacune d'elles délimite un passage percé dans ce bloc 140. La buse 137 est destinée à émettre un jet sur la glace de protection 124 pour la nettoyer. La buse 138 est destinée à émettre un jet sur la glace de protection 127 pour la nettoyer.

On peut prévoir que les jets émis par les buses 137 et 138 ne puissent être que des jets constitués uniquement de gaz et donc dépourvus de gouttelettes. Lorsqu'il en est ainsi, on évite que les jets de gaz émis par les buses 137 et 138 puissent contenir malencontreusement du liquide aspiré par effet venturi et identique à celui de gouttelettes projetées précédemment.

La buse 136 est destinée à émettre un jet constitué uniquement de gaz. La tête 135 comprend une buse 141 en complément de la buse 136. Sur la figure 8, on ne voit que la sortie de cette buse 141, qui délimite un passage percé dans le bloc 140.

Comme la buse 136, la buse 141 est une buse centrale d'émission d'un jet sur la pièce P. Contrairement à la buse 136, la buse 141 est prévue pour émettre un jet comprenant des gouttelettes, par exemple une pulvérisation de gouttelettes.

Lorsque le dispositif de mesure optique de l'équipement selon un deuxième mode de réalisation est dans une position de mesure pour pouvoir effectuer optiquement une ou plusieurs mesures dimensionnelles sur la pièce P, la tête 135 et les glaces de protection 124 et 127 sont positionnés par rapport à la pièce P comme cela est représenté sur la figure 8.

Pour son nettoyage, la pièce P est déplacée sous les buses 136 et 141. La buse 141 est employée avant la buse 136. Elle pulvérise des gouttelettes sur la pièce P. Une seule pulvérisation de gouttelettes peut être effectuée en un seul endroit sur la pièce P ou plusieurs pulvérisations de gouttelettes peuvent être effectuées en plusieurs endroits de la pièce P qui sont décalés entre eux selon une direction parallèle à l'axe de rotation Z. Dans ce deuxième cas, la pièce P est déplacée selon l'axe de rotation Z entre deux pulvérisations successives de gouttelettes. De la sorte, les gouttelettes peuvent être particulièrement bien réparties sur la pièce P. En outre, les pulvérisations successives peuvent être réglées différemment de manière à contenir des quantités de liquide différentes selon l'endroit de pulvérisation sur la pièce P.

Après que la buse 141 a émis un ou plusieurs jets de gouttelettes sur la pièce P, cette pièce P est déplacée et positionnée sous la buse 136. Ensuite, la buse 136 émet un jet de gaz, qui réalise un essuyage dynamique de la pièce P. La pièce P peut être déplacée selon l'axe de rotation Z également pendant son essuyage dynamique par le jet de gaz émis par la buse 136.

Pour le reste, l'équipement selon un deuxième mode de réalisation de l'invention peut avoir un fonctionnement semblable ou identique à celui de l'équipement 1 selon un premier mode de réalisation de l'invention. En particulier, le nettoyage de la glace de protection 124 par un jet émis par la buse 137 et le nettoyage de la glace de protection 127 par un jet émis par la buse 138 peuvent être réalisés quand a lieu le nettoyage de la pièce P par un jet de gaz émis par la buse 136.

Comme la buse 136 ne conduit que du gaz, on évite que les jets qu'elle émet puissent contenir malencontreusement du liquide alors qu'ils servent à effectuer des essuyages dynamiques.

De même que la buse 141 est prévue en complément de la buse 136, une buse d'émission d'un jet comprenant des gouttelettes peut être prévue en complément de chacune des buses 137 et 138.

## Revendications

1. Procédé de mesure sur une pièce (P) au moins partiellement usinée, comprenant une étape dans laquelle :
a) on réalise optiquement une mesure dimensionnelle sur la pièce (P),
**caractérisé en ce que** l'étape a) comprend une action dans laquelle :
b) on effectue un nettoyage de la pièce (P) au moyen d'un ou plusieurs jets (J₁) quand on réalise la mesure dimensionnelle, le procédé étant **caractérisé en ce qu'**il comprend une action dans laquelle :
c) pour déterminer à partir de quel instant au cours du nettoyage une erreur de mesure due au résidu liquide (R) sur la pièce (P) est considérée comme négligeable, on effectue une analyse au moins sur une décroissance qu'une valeur mesurée obtenue par la mesure dimensionnelle connaît pendant le nettoyage à mesure que du résidu liquide (R) présent sur la pièce (P) est ôté de cette pièce (P).

2. Procédé de mesure selon la revendication 1, **caractérisé en ce qu'**on effectue l'action c) en temps réel quand on effectue l'action b).

3. Procédé de mesure selon la revendication 1 ou 2, **caractérisé en ce que**, dans l'action c), on calcule la vitesse de décroissance de la valeur mesurée, on compare cette vitesse de décroissance à une vitesse prédéfinie et on applique la règle selon laquelle l'erreur de mesure due au résidu liquide (R) sur la pièce (P) est considérée comme négligeable à partir de l'instant où la vitesse de décroissance est inférieure à la vitesse prédéfinie.

4. Procédé de mesure selon l'une des revendications précédentes, **caractérisé en ce que** le jet (J₁) ou l'un des jets (J₁) est un jet à base de gaz, tel que l'air ou l'azote.

5. Procédé de mesure selon l'une des revendications précédentes, **caractérisé en ce que** le jet (J₁) ou l'un des jets (J₁) comprend une dispersion de gouttelettes.

6. Procédé de mesure selon l'une des revendications précédentes, **caractérisé en ce que** le jet (J₁) ou l'un des jets (J₁) est une pulvérisation de gouttelettes.

7. Procédé de mesure selon l'une des revendications précédentes, **caractérisé en ce que** les jets sont des jets successifs et comprennent un jet comprenant des gouttelettes puis un jet (J₁) à base de gaz.

8. Procédé de mesure selon l'une des revendications précédentes, **caractérisé en ce que** le nettoyage de la pièce (P) est interrompu momentanément pendant chaque mesure ponctuelle d'une succession de mesures ponctuelles que comprend la mesure dimensionnelle.

9. Procédé de mesure selon l'une des revendications précédentes, **caractérisé en ce qu'**on réalise la mesure dimensionnelle au moyen d'un dispositif de mesure optique (7) apte à émettre un rayonnement (21) et comprenant au moins une glace de protection (24, 27 ; 124, 127) destinée à être traversée par ce rayonnement (21), l'étape a) comprenant une action dans laquelle :
d) on effectue un nettoyage de la glace de protection (24, 27 ; 124, 127) au moyen d'un ou plusieurs jets (J₂, J₃) quand on réalise la mesure dimensionnelle.

10. Procédé de mesure selon la revendication 9, **caractérisé en ce que** le dispositif de mesure optique (7) comprend une caméra numérique (32), le procédé de mesure comprenant des actions dans lesquelles :
e) on réalise une analyse d'image à même de détecter, sur les images fournies par la caméra numérique (32), et de quantifier une éventuelle anomalie d'un type pouvant résulter d'une salissure sur la glace de protection (24, 27 ; 124, 127) ;
f) à partir de l'analyse d'image, on détermine si, sur la glace de protection (24, 27 ; 124, 127), il n'existe aucune salissure quantifiée comme rédhibitoire pour la mesure dimensionnelle.

11. Procédé de mesure selon la revendication 10, **caractérisé en ce qu'**on effectue l'action d) tant que, à l'étape f), on détermine que, sur la glace de protection (24, 27 ; 124, 127), il existe au moins une salissure quantifiée comme rédhibitoire pour la mesure dimensionnelle.

12. Appareil par exemple choisi parmi une machine de mesure autonome et un équipement pour une machine d'usinage (3), cet appareil comprenant un dispositif de mesure optique (7) adapté pour réaliser optiquement une mesure dimensionnelle sur une pièce (P) au moins partiellement usinée,
un dispositif de nettoyage (13) à même d'effectuer un nettoyage de la pièce (P) au moyen d'un ou plusieurs jet (J₁) quand le dispositif de mesure optique (7) réalise la mesure dimensionnelle,
**caractérisé en ce qu'**il comprend un calculateur (12) configuré pour réaliser une analyse au moins sur une décroissance qu'une valeur mesurée obtenue par la mesure dimensionnelle connaît pendant le nettoyage à mesure que du résidu liquide (R) présent sur la pièce (P) est ôté de cette pièce (P), et déterminer au moyen de cette analyse à partir de quel instant au cours du nettoyage une erreur de mesure due au résidu liquide (R) sur la pièce (P) est considérée comme négligeable.

13. Appareil selon la revendication 12, **caractérisé en ce que** le calculateur (12) est configuré pour, dans l'analyse, calculer la vitesse de décroissance de la valeur mesurée, comparer cette vitesse de décroissance à une vitesse prédéfinie et appliquer la règle selon laquelle l'erreur de mesure due au résidu liquide (R) sur la pièce (P) est considérée comme négligeable à partir de l'instant où la vitesse de décroissance est inférieure à la vitesse prédéfinie.

14. Appareil selon la revendication 12 ou 13, **caractérisé en ce que** le dispositif de nettoyage (13) est à même de produire un jet (J₁) à base de gaz, tel que l'air ou l'azote.

15. Appareil selon l'une des revendications 12 à 14, **caractérisé en ce que** le dispositif de nettoyage (13) est à même de produire un jet (J₁) comprenant une dispersion de gouttelettes.

16. Appareil selon l'une des revendications 12 à 15, **caractérisé en ce que** le dispositif de mesure optique (7) est apte à émettre un rayonnement (21) et comprend au moins une glace de protection (24, 27 ; 124, 127) destiné à être traversé par ce rayonnement (21), le dispositif de nettoyage (13) étant à même de réaliser simultanément un nettoyage de la pièce (P), au moyen du ou des jets (J₁), et au moins un nettoyage de la glace de protection (24, 27 ; 124, 127) au moyen d'un autre ou de plusieurs autres jets (J₂, J₃) tandis que le dispositif de mesure optique (7) est dans une position de mesure dans laquelle le dispositif de mesure optique (7) est à même de réaliser optiquement une mesure dimensionnelle sur la pièce (P).

## Patentansprüche

1. Verfahren zum Vermessen auf einem mindestens teilweise bearbeiteten Werkstück (P), das einen Schritt umfasst, in welchem:
a) optisch ein dimensionales Vermessen auf einem Werkstück (P) durchgeführt wird,
**dadurch gekennzeichnet, dass** der Schritt a) eine Handlung umfasst, in welcher:
b) ein Reinigen des Werkstücks (P) mittels eines oder mehrerer Strahlen (J₁) vorgenommen wird, wenn das dimensionale Vermessen durchgeführt wird,
wobei das Verfahren **dadurch gekennzeichnet ist, dass** es eine Handlung umfasst, in welcher:
c) zwecks Feststellung, ab welchem Zeitpunkt im Laufe des Reinigens ein Messfehler aufgrund des flüssigen Rückstands (R) auf dem Werkstück (P) als vernachlässigbar angesehen wird, eine Analyse von mindestens einer Abnahme, die ein durch das dimensionale Vermessen erhaltener Messwert während des Reinigens erfährt, wenn auf dem Werkstück (P) vorhandener flüssiger Rückstand (R) von diesem Werkstück (P) entfernt wird, vorgenommen wird.

2. Verfahren zum Vermessen nach Anspruch 1, **dadurch gekennzeichnet, dass** die Handlung c) in Echtzeit vorgenommen wird, wenn die Handlung b) vorgenommen wird.

3. Verfahren zum Vermessen nach Anspruch 1 oder 2, **dadurch gekennzeichnet, dass** in der Handlung c) die Abnahmegeschwindigkeit des gemessenen Wertes berechnet wird, diese Abnahmegeschwindigkeit mit einer vorgegebenen Geschwindigkeit verglichen wird und die Regel angewendet wird, nach welcher der Messfehler aufgrund des flüssigen Rückstands (R) auf dem Werkstück (P) ab dem Zeitpunkt als vernachlässigbar angesehen wird, an dem die Abnahmegeschwindigkeit unterhalb der vorgegebenen Geschwindigkeit liegt.

4. Verfahren zum Vermessen nach einem der vorstehenden Ansprüche, **dadurch gekennzeichnet, dass** der Strahl (J₁) oder einer der Strahlen (J₁) ein Strahl auf Basis von Gas wie Luft oder Stickstoff ist.

5. Verfahren zum Vermessen nach einem der vorstehenden Ansprüche, **dadurch gekennzeichnet, dass** der Strahl (J₁) oder einer der Strahlen (J₁) eine Dispersion von Tröpfchen umfasst.

6. Verfahren zum Vermessen nach einem der vorstehenden Ansprüche, **dadurch gekennzeichnet, dass** der Strahl (J₁) oder einer der Strahlen (J₁) ein Sprühnebel von Tröpfchen ist.

7. Verfahren zum Vermessen nach einem der vorstehenden Ansprüche, **dadurch gekennzeichnet, dass** die Strahlen aufeinanderfolgende Strahlen sind und einen Strahl umfassen, der Tröpfchen gefolgt von einem Strahl (J₁) auf Basis von Gas umfasst.

8. Verfahren zum Vermessen nach einem der vorstehenden Ansprüche, **dadurch gekennzeichnet, dass** das Reinigen des Werkstücks (P) während jeder punktuellen Messung von einer Abfolge punktueller Messungen, die das dimensionale Vermessen enthält, vorübergehend unterbrochen wird.

9. Verfahren zum Vermessen nach einem der vorstehenden Ansprüche, **dadurch gekennzeichnet, dass** das dimensionale Vermessen mittels einer optischen Messeinrichtung (7) durchgeführt wird, die geeignet ist, eine Strahlung (21) auszusenden und mindestens eine Schutzscheibe (24, 27; 124, 127) umfasst, die dazu bestimmt ist, von dieser Strahlung (21) durchquert zu werden, wobei Schritt a) eine Handlung umfasst, in welcher:
d) ein Reinigen der Schutzscheibe (24, 27; 124, 127) mittels eines oder mehrerer Strahlen (J₂, J₃) vorgenommen wird, wenn das dimensionale Vermessen durchgeführt wird.

10. Verfahren zum Vermessen nach Anspruch 9, **dadurch gekennzeichnet, dass** die optische Messeinrichtung (7) eine Digitalkamera (32) umfasst, wobei das Verfahren zum Vermessen Handlungen umfasst, in welchen:
e) eine Bildanalyse durchgeführt wird, die in der Lage ist, auf den von der Digitalkamera (32) gelieferten Bildern eine eventuelle Anomalie von einer Art, die zu einer Verschmutzung auf der Schutzscheibe (24, 27; 124, 127) führen kann, zu erfassen und zu quantifizieren;
f) anhand der Bildanalyse festgestellt wird, ob auf der Schutzscheibe (24, 27; 124, 127) keine Verschmutzung vorhanden ist, die für das dimensionale Vermessen als untragbar quantifiziert ist.

11. Verfahren zum Vermessen nach Anspruch 10, **dadurch gekennzeichnet, dass** die Handlung d) vorgenommen wird, während im Schritt f) festgestellt wird, dass auf der Schutzscheibe (24, 27; 124, 127) mindestens eine Verschmutzung vorhanden ist, die für das dimensionale Vermessen als untragbar quantifiziert ist.

12. Vorrichtung, beispielsweise ausgewählt aus einem autarken Messgerät und einem Ausstattungsteil für ein Bearbeitungswerkzeug (3), diese Vorrichtung umfassend eine optische Messeinrichtung (7), die geeignet ist, um ein dimensionales Vermessen auf einem mindestens teilweise bearbeiteten Werkstück (P) optisch durchzuführen,
eine Reinigungseinrichtung (13), die in der Lage ist, ein Reinigen des Werkstücks (P) mittels eines oder mehrerer Strahlen (J₁) vorzunehmen, wenn die optische Messeinrichtung (7) das dimensionale Vermessen durchführt, **dadurch gekennzeichnet, dass** sie einen Rechner (12) umfasst, der konfiguriert ist, um eine Analyse mindestens einer Abnahme durchzuführen, die ein durch das dimensionale Vermessen erhaltener Wert während des Reinigens erfährt, wenn auf dem Werkstück (P) vorhandener flüssiger Rückstand (R) von diesem Werkstück (P) entfernt wird, und mittels dieser Analyse festzustellen, ab welchem Zeitpunkt im Laufe des Reinigens ein Messfehler aufgrund des flüssigen Rückstands (R) auf dem Werkstück (P) als vernachlässigbar angesehen wird.

13. Vorrichtung nach Anspruch 12, **dadurch gekennzeichnet, dass** der Rechner (12) konfiguriert ist, um in der Analyse die Abnahmegeschwindigkeit des gemessenen Wertes zu berechnen, diese Abnahmegeschwindigkeit mit einer vorgegebenen Geschwindigkeit zu vergleichen und die Regel anzuwenden, nach welcher der Messfehler aufgrund des flüssigen Rückstands (R) auf dem Werkstück (P) ab dem Zeitpunkt als vernachlässigbar angesehen wird, an dem die Abnahmegeschwindigkeit unterhalb der vorgegebenen Geschwindigkeit liegt.

14. Vorrichtung nach Anspruch 12 oder 13, **dadurch gekennzeichnet, dass** die Reinigungseinrichtung (13) in der Lage ist, einen Strahl (J₁) auf der Basis von Gas wie Luft oder Stickstoff zu erzeugen.

15. Vorrichtung nach einem der Ansprüche 12 bis 14, **dadurch gekennzeichnet, dass** die Reinigungseinrichtung (13) in der Lage ist, einen Strahl (J₁) zu erzeugen, der eine Dispersion von Tröpfchen umfasst.

16. Vorrichtung nach einem der Ansprüche 12 bis 15, **dadurch gekennzeichnet, dass** die optische Messeinrichtung (7) geeignet ist, eine Strahlung (21) auszusenden und mindestens eine Schutzscheibe (24, 27; 124, 127) umfasst, dazu bestimmt, von dieser Strahlung (21) durchquert zu werden, wobei die Reinigungseinrichtung (13) in der Lage ist, gleichzeitig ein Reinigen des Werkstücks (P) mittels des oder der Strahlen (J₁) und mindestens ein Reinigen der Schutzscheibe (24, 27; 124, 127) mittels eines anderen oder mehrerer anderer Strahlen (J₂, J₃) durchzuführen, während die optische Messeinrichtung (7) sich in einer Messposition befindet, in welcher die optische Messeinrichtung (7) in der Lage ist, ein Vermessen auf dem Werkstück (P) optisch durchzuführen.

## Claims

1. A method for measuring on an at least partially machined workpiece (P), comprising a step in which:
a) dimensional measurement is performed optically on the workpiece (P),
**characterised in that** step a) comprises an action in which:
b) the workpiece (P) is cleaned using one or more jets (J₁) when the dimensional measurement is performed,
the method being **characterised in that** it comprises an action in which:
c) in order to determine from what instant during cleaning a measurement error due to the liquid residue (R) on the workpiece (P) is considered negligible, an analysis is carried out at least of a decrease undergone by a measured value obtained by the dimensional measurement during cleaning as liquid residue (R) present on the workpiece (P) is removed from said workpiece (P).

2. A measuring method according to Claim 1, **characterised in that** action c) is carried out in real time when action b) is being carried out.

3. A measuring method according to Claim 1 or 2, **characterised in that** action c) involves calculating the rate of decrease in the measured value, comparing this rate of decrease to a predefined rate and applying the rule according to which the measurement error due to the liquid residue (R) on the workpiece (P) is considered negligible from the instant when the rate of decrease is less than the predefined rate.

4. A measuring method according to one of the preceding claims, **characterised in that** the jet (J₁) or one of the jets (J₁) is a jet based on gas, such as air or nitrogen.

5. A measuring method according to one of the preceding claims, **characterised in that** the jet (J₁) or one of the jets (J₁) comprises a droplet dispersion.

6. A measuring method according to one of the preceding claims, **characterised in that** the jet (J₁) or one of the jets (J₁) is droplets in the form of a spray.

7. A measuring method according to one of the preceding claims, **characterised in that** the jets are successive jets and comprise a jet comprising droplets and then a jet (J₁) based on gas.

8. A measuring method according to one of the preceding claims, **characterised in that** cleaning of the workpiece (P) is interrupted momentarily during each spot measurement of a succession of spot measurements comprising the dimensional measurement.

9. A measuring method according to one of the preceding claims, **characterised in that** the dimensional measurement is performed using an optical measuring device (7) capable of emitting radiation (21) and comprising at least one transparent protective cover (24, 27; 124, 127) intended to be passed through by this radiation (21), step a) comprising an action in which:
d) the transparent protective cover (24, 27; 124, 127) is cleaned using one or more jets (J₂, J₃) when the dimensional measurement is being performed.

10. A measuring method according to Claim 9, **characterised in that** the optical measuring device (7) comprises a digital camera (32), the measuring method comprising actions in which:
e) image analysis is performed which is capable of detecting, on the images provided by the digital camera (32), and of quantifying any anomaly of a type which may result in soiling of the transparent protective cover (24, 27; 124, 127);
f) from the image analysis, it is established whether there is any soiling on the transparent protective cover (24, 27; 124, 127) which is quantified as constituting a bar to dimensional measurement.

11. A measuring method according to Claim 10, **characterised in that** action d) is carried out as long as, in step f), it is determined that there is at least one area of soiling on the transparent protective cover (24, 27; 124, 127) quantified as constituting a bar to dimensional measurement.

12. An apparatus selected for example from an autonomous measuring machine and a device for a machining tool (3), this apparatus comprising an optical measuring device (7) capable of performing optically a dimensional measurement on an at least partially machined workpiece (P),
a cleaning device (13) capable of carrying out cleaning of the workpiece (P) using one or more jets (J₁) when the optical measuring device (7) is performing the dimensional measurement, **characterised in that** it comprises a calculator (12) configured to perform an analysis at least of a decrease undergone by a measured value obtained by the dimensional measurement during cleaning as liquid residue (R) present on the workpiece (P) is removed from said workpiece (P), and to determine by means of said analysis from what instant during cleaning a measurement error due to the liquid residue (R) on the workpiece (P) is considered negligible.

13. An apparatus according to Claim 12, **characterised in that** the calculator (12) is configured to calculate, as part of the analysis, the rate of decrease in the measured value, to compare this rate of decrease to a predefined rate and to apply the rule according to which the measurement error due to the liquid residue (R) on the workpiece (P) is considered negligible from the instant when the rate of decrease is less than the predefined rate.

14. An apparatus according to Claim 12 or 13, **characterised in that** the cleaning device (13) is capable of producing a jet (J₁) based on gas, such as air or nitrogen.

15. An apparatus according to one of Claims 12 to 14, **characterised in that** the cleaning device (13) is capable of producing a jet (J₁) comprising a droplet dispersion.

16. An apparatus according to one of Claims 12 to 15, **characterised in that** the optical measuring device (7) is capable of emitting radiation (21) and comprises at least one transparent protective cover (24, 27; 124, 127) intended to be passed through by this radiation (21), the cleaning device (13) being capable of simultaneously performing cleaning of the workpiece (P) using the jet(s) (Ji), and at least cleaning of the transparent protective cover (24, 27; 124, 127) using another jet or a plurality of other jets (J₂, J₃) while the optical measuring device (7) is in a measuring position in which the optical measuring device (7) is capable of performing optically a dimensional measurement on the workpiece (P).
